# FASCICULE DE BREVET EUROPEEN

(11) **EP 2 806 776 B1**
(45) Date de publication et mention de la délivrance du brevet: **11.03.2020**
(21) Numéro de dépôt: 13704623.1
(22) Date de dépôt: 18.01.2013
(51) Int. Cl.: A47J 36/02, B05D 5/08, B32B 3/10, B32B 5/00, B32B 5/08, B32B 7/02, B32B 15/00, B32B 27/00, B32B 27/28, C09D 183/04, B32B 7/00, B32B 9/00

(54) **REVETEMENT SOL-GEL COMPORTANT DES PARTICULES ANISOTROPES ET ARTICLE CULINAIRE MUNI D'UN TEL REVETEMENT**
SOL-GEL-BESCHICHTUNG MIT ANISOTROPEN PARTIKELN UND MIT EINER SOLCHEN BESCHICHTUNG VERSEHENER KÜCHENARTIKEL
SOL-GEL COATING COMPRISING ANISOTROPIC PARTICLES AND A CULINARY ARTICLE PROVIDED WITH SUCH A COATING

(30) Priorité: 25.01.2012 FR 1200226
(43) Date de publication de la demande: 03.12.2014
(73) Titulaire: SEB S.A., 69130 Ecully (FR)
(72) Inventeur: DUBANCHET, Aurélien, F-73100 Gresy sur Aix (FR); LE BRIS, Stéphanie, F-73000 Chambery (FR); PERILLON, Jean-Luc, F-26130 Saint Paul Trois Chateaux (FR)
(74) Mandataire: Rivière, Sophie
(86) Numéro de dépôt international: PCT/FR2013/050115
(87) Numéro de publication internationale: WO 2013/110882

(56) Documents cités:
- US-A1- 2010 181 322
- US-A1- 2011 174 826
- US-A1- 2011 189 546
- US-A1- 2011 308 989

## Description

La présente invention concerne de manière générale un revêtement obtenu par voie sol-gel incorporant des particules anisotropes (de type paillettes ou fibres) et pouvant être utilisé sur tout type de substrat, notamment métallique, ainsi qu'un article culinaire muni d'un tel revêtement.

La présente invention concerne également un procédé d'application d'un tel revêtement sur un substrat et l'utilisation d'un tel revêtement pour la fabrication d'un article culinaire.

Le domaine visé est en premier lieu celui des articles culinaires, mais la présente invention peut également concerner tout autre type de surface, telle que la semelle d'un fer à repasser, les plaques d'un fer à lisser, ou encore un capot d'un appareil ménager.

Les revêtements sol-gels sont particulièrement appréciés dans le domaine des articles culinaires car ils permettent d'obtenir des revêtements colorés qui présentent une bonne dureté et une résistance à la température. Ils présentent toutefois l'inconvénient de s'écailler facilement au niveau de certaines zones particulièrement sensibles, qui sont les zones de forte sollicitation de l'article culinaire.

Pour éviter ce problème, il est connu de l'homme de l'art d'incorporer dans le revêtement sol-gel des paillettes, qui ont naturellement tendance à s'orienter horizontalement par rapport au support du revêtement ou de manière aléatoire. C'est notamment le cas pour le type de revêtement vitreux tel que décrit dans US2010/0181322 et EP 2206801, qui comprend une couche de finition pailletée.

Le but de la présente invention consiste à mettre au point par voie sol-gel un revêtement inorganique, qui présente à la fois une bonne dureté et une bonne résistance à l'écaillage. Afin de combiner ces avantages, une voie élégante consiste à incorporer des paillettes, et plus généralement des particules anisotropes, dans le revêtement sol-gel, et à les orienter de manière essentiellement perpendiculaire au revêtement formé dans les zones sensibles.

Plus particulièrement la présente invention a pour objet un revêtement vitreux caractérisé en ce qu'il comprend au moins une couche se présentant sous forme d'un film continu d'un matériau sol-gel comprenant une matrice formée à partir d'au moins un polyalcoxylate métallique et dans laquelle sont dispersées des particules de forme anisotrope, ladite couche comprenant au moins une zone dans laquelle lesdites particules sont des particules qui sont majoritairement inclinées d'un angle α compris entre 20° et 90° par rapport au plan moyen du film.

Dans cette zone où les particules sont essentiellement perpendiculaires, la résistance à l'écaillage est nettement améliorée.

Par particules de forme anisotrope, on entend au sens de la présente invention des particules dont les dimensions caractéristiques ne sont pas identiques dans toutes les directions, comme par exemples des fibres (de forme essentiellement unidimensionnelle) ou des paillettes (de forme essentiellement bidimensionnelle ou plate).

Une telle orientation des particules anisotropes peut être obtenue de différentes manières, en fonction du type des particules anisotropes utilisées.

Ainsi, dans le cas de particules aptes à être orientées par un moyen mécanique (comme les fibres), l'orientation essentiellement perpendiculaire à la couche de revêtement peut par exemple résulter d'un positionnement lié au procédé d'application du revêtement, comme par exemple l'orientation au travers d'un applicateur monodirectionnel comme une micro-buse.

Dans le cas de particules aptes à être orientées par un moyen physique (par exemple électrique ou magnétique), l'orientation essentiellement perpendiculaire des particules anisotropes par rapport à la couche de revêtement peut résulter d'un positionnement consécutif ou simultané à l'application du revêtement, comme par exemple l'orientation de particules magnétisables sous l'effet d'un champ magnétique ou de particules électrisables sous l'effet d'un champ électrique.

De manière avantageuse, plus de 66%, et de préférence plus de 80% desdites particules (32) de forme anisotrope peuvent être inclinées d'un angle α compris entre 20° et 90° par rapport au plan moyen du film.

Un taux élevé de particules inclinées d'un angle α compris entre 20° et 90° par rapport au plan moyen du film permet d'améliorer le renforcement mécanique de la couche de sol-gel en limitant la propagation des fissures préalables à l'écaillage.

Les particules magnétisables peuvent se présenter sous différentes natures.

Dans le cadre de la présente invention, les particules magnétisables peuvent être avantageusement des particules comprenant au moins un métal ferromagnétique.

Elles peuvent être de nature homogène c'est-à-dire constituées du même matériau ou de nature composite, c'est-à-dire que les particules magnétisables ont une structure cœur-enveloppe, dans laquelle le métal ferromagnétique est dans le cœur et/ou dans l'enveloppe desdites particules.

A titre d'exemples de particules magnétisables composites, on peut notamment citer des paillettes de mica enrobées d'oxyde de fer Fe₂O₃ ou des fibres d'acier inoxydable enrobées d'un matériau sol-gel, comme protection vis-à-vis de la corrosion lors des étapes de mise en œuvre du revêtement, ou encore des paillettes en matériau plastique enrobées d'oxyde de fer Fe₂O₃, ou des paillettes dont le cœur est en métal ferromagnétique et l'enveloppe est en un matériau plastique ou en un matériau sol-gel.

Le revêtement selon l'invention peut en outre avantageusement comprendre des particules non magnétisables pour améliorer le renforcement du revêtement. Ces particules non magnétisables, peuvent être de forme quelconque (sphériques, fibres ou paillettes ou « irrégulières » ou présentant une structure cœur-enveloppe), de taille micrométrique, voire même nanométrique.

A titre de particules non magnétisables utilisables dans le cadre de la présente invention, on peut notamment citer les paillettes de mica, et les paillettes de mica ou de silice enrobées de dioxyde de titane.

Selon un mode de réalisation particulièrement avantageux, le revêtement vitreux de la présente invention est non opaque (car exempt de pigments opaques) et comporte en outre, adjacente à la zone dans laquelle les particules sont essentiellement perpendiculaires à la couche de revêtement vitreux, au moins une zone dans laquelle les particules sont :
▪ soit des particules majoritairement (avantageusement plus de 66% des particules, et de préférence plus de 80% des particules) inclinées d'un angle α compris entre 0° et 20° par rapport au film (en d'autres termes disposées de manière essentiellement parallèle au film),
▪ soit des particules disposées de manière aléatoire dans la couche se présentant sous forme de film,
de manière à former un motif tridimensionnel.

L'alternance des zones dans lesquelles les particules sont disposées de manière essentiellement parallèle et/ou aléatoire au film de sol-gel et des zones dans lesquelles les particules sont des particules qui sont majoritairement inclinées d'un angle α compris entre 20° et 90° par rapport au plan moyen du film permet de définir un décor, qui pourra être perçu par l'utilisateur comme un décor tridimensionnel.

Selon un premier mode de réalisation particulièrement avantageux de la présente invention, le revêtement vitreux selon l'invention peut être monocouche : dans ce cas, il n'est constitué que de la couche de finition.

Par couche de finition, on entend, au sens de la présente invention, une couche qui est destinée à être en contact avec l'environnement.

Selon un deuxième mode de réalisation particulièrement avantageux de la présente invention, le revêtement vitreux selon l'invention peut être multicouche : dans ce cas, il peut avantageusement comprendre :
- une sous-couche destinée à être disposée sur un support, et
- au moins une couche de finition recouvrant la sous-couche et destinée à être en contact avec l'environnement extérieur, la couche de finition se présentant sous forme d'un film continu d'un matériau sol-gel comprenant une matrice formée à partir d'au moins un polyalcoxylate métallique dans laquelle sont dispersées lesdites particules anisotropes.

La sous-couche peut être de différentes natures. Par exemple elle peut se présenter sous forme d'un film continu d'un matériau sol-gel, le matériau sol-gel comprenant de préférence une matrice formée à partir d'au moins un polyalcoxylate métallique.

La sous-couche peut également être une base dure continue ou discontinue, cette base dure étant en émail, en céramique ou en métal.

A titre de polyalcoxylates métalliques utilisables dans le revêtement, tant au niveau de la sous-couche (le cas échéant) qu'au niveau de la couche de finition, on peut notamment citer les polyalcoxysilanes, les aluminates, les titanates, les zirconates, les vanadates, les borates et leurs mélanges.

Les polyalcoxysilanes sont les polyalcoxylates préférés dans le cadre de la présente invention.

De manière avantageuse, le film de matériau sol-gel de la couche de finition et/ou de la sous-couche (le cas échéant) peut en outre comprendre au moins 5% en poids par rapport au poids total du revêtement d'au moins un oxyde métallique colloïdal dispersé dans ladite matrice.

Avantageusement, l'oxyde métallique colloïdal est choisi dans le groupe comprenant la silice, l'alumine, l'oxyde de cérium, l'oxyde de zinc, l'oxyde de vanadium et l'oxyde de zirconium.

De manière avantageuse, le matériau sol-gel constitutif du revêtement vitreux selon l'invention peut en outre comprendre au moins une huile de silicone.

A titre d'huiles de silicone utilisables dans le cadre de la présente invention, on peut notamment citer les huiles méthyl-phényl silicones, les huiles méthyl silicones et les huiles de silicone hydroxylées.

De manière avantageuse, le revêtement vitreux selon l'invention peut en outre comprendre au moins un pigment choisi parmi les pigments thermostables, les sels métalliques, les pigments semi-conducteurs thermochromes et leurs mélanges.

La présente invention a également pour objet un article caractérisé en ce qu'il comprend un support présentant deux faces opposées, dont l'une au moins est recouverte d'un revêtement selon l'invention.

En ce qui concerne la nature du support de l'article, celui-ci peut être réalisé en un matériau choisi parmi les métaux, le bois, le verre, les céramiques et les matières plastiques. On utilisera de préférence un article dont le support est un support métallique en aluminium anodisé ou non, ou en aluminium poli, brossé ou microbillé, ou en acier inoxydable poli, brossé ou microbillé, ou en fonte, ou en cuivre martelé ou poli.

A titre d'exemples d'articles selon l'invention, on peut notamment citer les articles culinaires, ou les semelles de fer à repasser, ou les plaques de fers à lisser, ou encore les capots d'appareil ménager.

La présente invention a encore pour objet l'utilisation d'un revêtement vitreux selon l'invention tel que défini précédemment pour la fabrication d'un article culinaire.

Enfin, la présente invention a encore pour objet un procédé de fabrication d'un revêtement vitreux selon l'invention tel que défini précédemment sur un support dans lequel sont dispersées des particules anisotropes, caractérisé en ce qu'il comprend une étape d'orientation desdites particules anisotropes par un moyen physique (par exemple par application d'un champ électrique ou magnétique) ou mécanique (par exemple lors de l'application du revêtement à l'aide d'applicateur monodirectionnel comme une micro-buse) dans au moins une zone (311) dudit revêtement vitreux.

Selon un mode de réalisation particulièrement avantageux de l'invention, le procédé peut comprendre les étapes suivantes :
a) la fourniture du support ;
b) une étape de préparation d'une composition hybride comprenant au moins un précurseur sol-gel de type alcoxyde métallique et des particules de forme anisotrope ;
c) l'hydrolyse dudit précurseur sol-gel par introduction d'eau et d'un catalyseur acide ou basique, suivie d'une réaction de condensation pour obtenir une composition sol-gel SG ;
d) le maintien du support à une température inférieure ou égale à 100°C puis l'application, directement ou indirectement sur tout ou partie du support, d'au moins une couche (31) de composition sol-gel SG ;
e) l'orientation desdites particules anisotropes par un moyen physique ou mécanique dans au moins une zone de la couche de composition SG ; puis
f) la cuisson, qui est de préférence à une température comprise entre 200°C et 350°C.

Dans le cas où l'on utilise des particules de forme anisotrope magnétisables, l'étape e) d'orientation des particules magnétisables est une étape d'aimantation par application d'un champ magnétique, qui est réalisée soit au cours de l'application d) de la composition sol-gel SG sur le support, soit postérieurement à ladite étape d'application d) et préalablement à l'étape f) de cuisson.

Selon un mode de réalisation particulièrement avantageux de la présente invention, la composition sol-gel SG est essentiellement exempte de pigments opaques, de manière à ce que la couche de composition SG soit transparente, et l'aimantation e) comprend l'application d'un champ magnétique dans au moins une zone spécifique de la couche de composition SG, la ou les zones immédiatement adjacentes à ladite zone spécifique n'étant pas soumise(s) à l'effet du champ magnétique ou soumise(s) à l'effet des lignes de champ sensiblement horizontales, de manière à former un motif tridimensionnel.

Le procédé selon l'invention peut également comprendre en outre, préalablement à l'application d) de la couche de composition SG, la réalisation d'au moins une sous-couche (30) disposée entre le support et la couche de finition. De préférence la sous-couche est une sous-couche pigmentée obtenue par
• préparation d'une composition colorée comprenant au moins un précurseur sol-gel de type alcoxyde métallique et au moins un pigment choisi parmi les pigments thermostables, les sels métalliques, les pigments semi-conducteurs thermochromes et leurs mélanges ; puis
• hydrolyse dudit précurseur sol-gel par introduction d'eau et d'un catalyseur acide ou basique, et condensation pour obtenir une composition sol-gel colorée SG0 ; et
• application, directement sur tout ou partie du support présentant une température inférieure à 100°C, de la composition sol-gel colorée pour former la sous-couche pigmentée, cette étape d'application étant de préférence suivie d'un séchage à une température inférieure ou égale à 100°C.

Un séchage de la sous-couche pigmentée à une température inférieure ou égale à 100°C évite de durcir la sous-couche, de sorte que lorsque l'on applique ensuite la couche de finition, cette application se fait sur une sous-couche « non durcie », et donc essentiellement non hydrophobe : cela permet non seulement d'obtenir une couche de finition se présentant sous forme de film, mais aussi la possibilité pour les particules de la couche de finition qui sont orientées de pénétrer dans la sous-couche qui est encore plastique, et donc de contribuer par un meilleur ancrage à améliorer le renforcement des propriétés mécaniques.

D'autres avantages et particularités de la présente invention résulteront de la description qui va suivre, donnée à titre d'exemple non limitatif et faite en référence aux figures annexées :
- la figure 1 représente une vue schématique en coupe d'un premier exemple de réalisation d'une poêle selon l'invention munie d'un film de revêtement vitreux monocouche (comportant au moins une zone avec des particules anisotropes essentiellement perpendiculaires au film) ;
- la figure 2 représente une vue schématique en coupe d'un deuxième exemple de réalisation d'une poêle selon l'invention munie d'un revêtement vitreux bicouche comportant au moins une zone avec des particules anisotropes essentiellement perpendiculaires au film ;

- la figure 3 représente une vue schématique en coupe d'un troisième exemple de réalisation d'une poêle selon l'invention munie d'un revêtement vitreux bicouche comportant un motif tridimensionnel ;
- la figure 4 représente une série de cinq images 4A à 4E de microscopie électronique à balayage (MEB) d'une coupe de la poêle illustrée sur la figure 3 réalisées au niveau de la zone avec des particules anisotropes essentiellement perpendiculaires au film ;
- la figure 5 représente une série de quatre images 5A à 5D de microscopie électronique à balayage (MEB) d'une coupe de la poêle illustrée sur la figure 3 réalisées au niveau de la zone avec des particules anisotropes essentiellement parallèles au film.

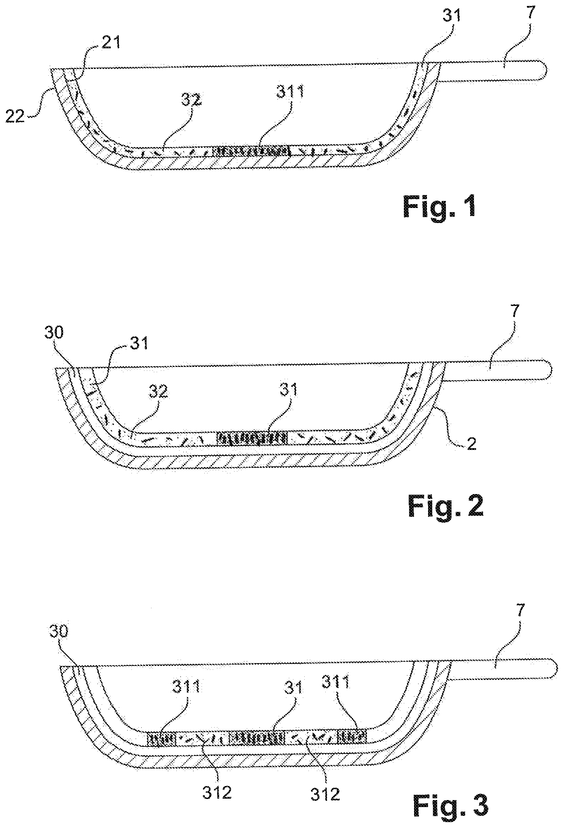

Sur la figure 1, on a représenté à titre d'exemple d'article culinaire selon l'invention, une poêle 1 avant l'étape d'aimantation, qui comprend un support 2 se présentant sous forme de calotte creuse et une poignée de préhension 7. Le support 2 comprend une face intérieure 21 qui est la face orientée du côté des aliments susceptibles d'être reçus dans la poêle 1, et une face extérieure 22 qui est destinée à être disposée vers une source de chaleur extérieure.

Le support 2 comprend, sur sa face intérieure 21, une monocouche de revêtement vitreux 3, qui est uniquement constituée d'une couche de finition 31 se présentant sous forme de film continu. Il s'agit d'un film continu 31 d'un matériau sol-gel comprenant une matrice formée à partir d'au moins un polyalcoxylate métallique et dans laquelle sont dispersées des particules 32 de forme anisotrope (par exemple des paillettes ou des microfibres, comme montré dans les exemples illustratifs de la présente invention présentés ci-après) .

La figure 1 montre que la couche de finition comprend au moins une zone 311 dans laquelle les particules sont essentiellement perpendiculaires à la couche de finition.

Cette orientation spécifique des particules anisotropes 32 dans la zone 311 peut par exemple être obtenue par aimantation si les particules anisotropes comportent des particules magnétisables. Cette aimantation de la zone spécifique 311 peut par exemple être réalisée en disposant sous le support un aimant permanent, notamment de type élastomère (ce qui limite les conditions d'aimantation à une température inférieure à 80°C) ou un électroaimant.

Il est également possible d'utiliser un aimant permanent de type Ferrite ou Néodyme. Dans ce cas, la valeur de température maximale des conditions dans lesquelles s'effectue l'aimantation peut être alors supérieure à 80°C, mais devra rester en dessous de la température de curie des aimants utilisés.

De manière préférentielle, on utilise un aimant émettant un champ magnétique dont l'intensité est comprise entre 40 et 100 mT, et de préférence de l'ordre de 70 mT.

La figure 1 montre clairement que les particules magnétisables de la couche de finition 31 sont orientées perpendiculairement à cette couche dans cette zone spécifique 311, selon les lignes de champ produites par l'aimant permanent situé juste au-dessous de cette zone 311.

La figure 2 représente une vue schématique en coupe d'un deuxième exemple de réalisation d'une poêle selon l'invention, qui se différencie de celui illustré sur la figure 1 en ce que le revêtement vitreux 3 est bicouche. Le revêtement bicouche 3 comprend une sous-couche 30 disposée sur la face intérieure 21 du support 2 et une couche de finition 31 se présentant sous forme d'un film continu d'un matériau sol-gel recouvrant la sous-couche 30, les particules anisotropes 32 étant incluses dans la couche de finition. Le matériau sol-gel de la couche de finition peut notamment comprendre une matrice formée à partir d'au moins un polyalcoxylate métallique dans laquelle sont dispersées les particules 32.

La figure 3 représente une vue schématique en coupe d'un troisième exemple de réalisation d'une poêle 1 selon l'invention munie d'un revêtement vitreux bicouche comportant un motif tridimensionnel formé par l'alternance de zones 312 avec des particules anisotropes essentiellement parallèles au film et de zones 311 avec des particules essentiellement perpendiculaires au film.

L'orientation spécifique des particules anisotropes 32 dans les zones 311 peut par exemple être obtenue par aimantation si les particules anisotropes comportent des particules magnétisables.

Ainsi, cette aimantation peut par exemple être réalisée en disposant sous le support une pluralité d'aimants permanents concentriques en élastomère, qui émettent un champ magnétique de même intensité ou d'intensités différentes, par exemple de l'ordre de 80 mT mesuré de manière indépendante. Ces aimants concentriques peuvent avantageusement se présenter sous forme d'un disque central de faible diamètre (par exemple égal ou inférieur à 15 mm) et d'une pluralité d'anneaux concentriques disposés autour de ce disque central d'une largeur de l'ordre de 10 à 15 mm. Ces aimants peuvent avantageusement être disposés sur un substrat (par exemple un plateau en acier inoxydable) pouvant se déplacer perpendiculairement au support de l'article. Ce déplacement peut se faire au moyen d'un vérin qui amène le substrat (ou plateau) à proximité de l'article à aimanter, de manière à définir un entrefer.

Les particules anisotropes magnétisables vont alors s'orienter selon les lignes de champ, c'est-à-dire perpendiculairement au support 2 (ou au film 3) au niveau des zones 311 sous lesquelles on a disposé un aimant (les lignes de champ étant perpendiculaires au revêtement sous forme de film), et parallèlement au support 2 (et donc au film 3) dans les zones 312 où les lignes de champ sont parallèles au support 2, avec un continuum d'orientation progressive des particules anisotropes magnétisables entre ces deux zones.

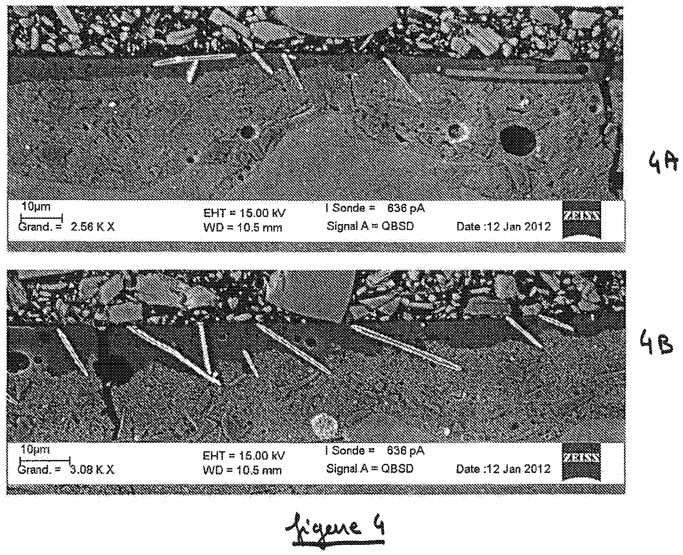

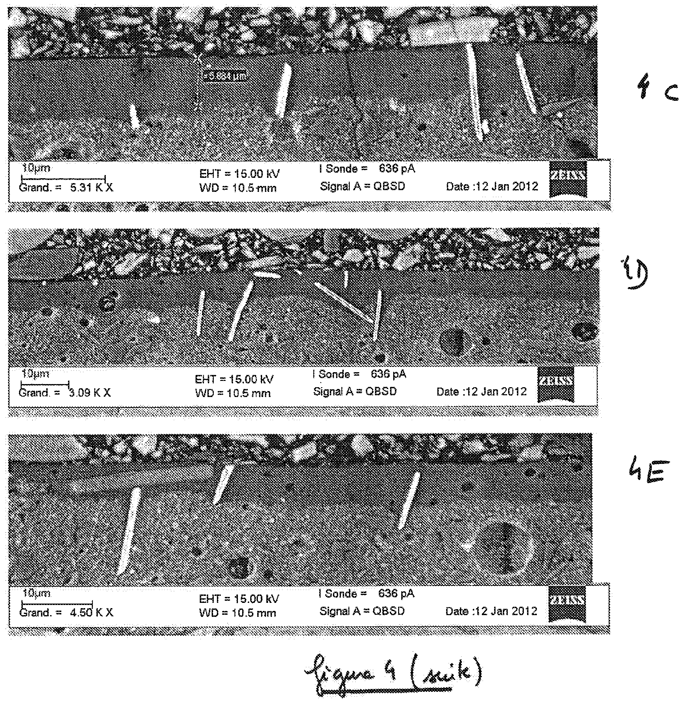

La figure 4 représente une série de cinq images 4A à 4E de microscopie électronique à balayage (MEB) d'une coupe de la poêle 1 illustrée sur la figure 3 réalisées au niveau de la zone 311 avec des particules anisotropes essentiellement perpendiculaires au revêtement sous forme de film.

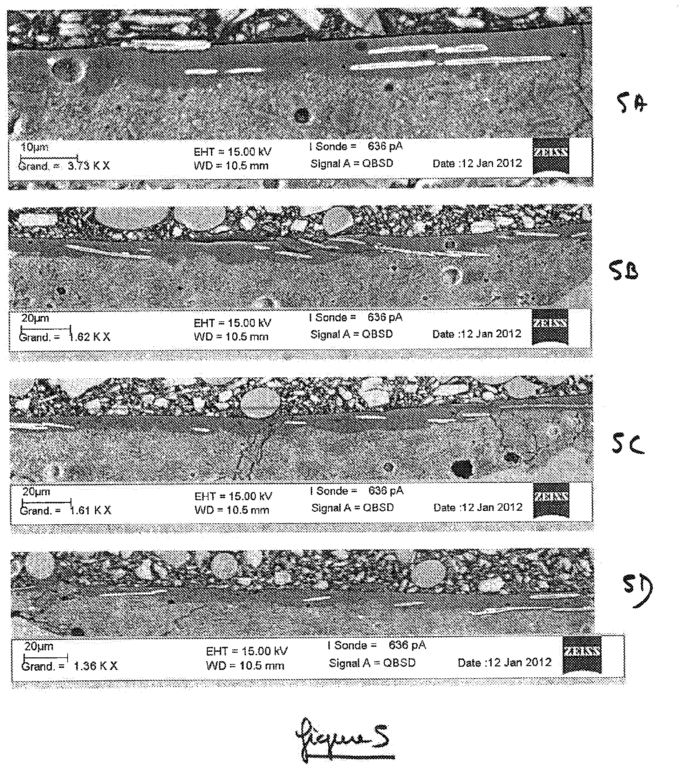

La figure 5 représente une série de quatre images 5A à 5D de microscopie électronique à balayage (MEB) d'une coupe de la poêle illustrée sur la figure 3 réalisées au niveau de la zone 312 avec des particules anisotropes essentiellement parallèles au revêtement.

Dans le cas de particules anisotropes magnétisables, une zone 311 correspond à une zone sous laquelle un aimant permanent a été déposé et au droit duquel les lignes de champ sont perpendiculaires au support. Dans la zone 312 les lignes de champs sont orientées parallèlement au support et on passe de l'une à l'autre par un continuum d'orientation progressive des particules magnétisables.

### EXEMPLES

### Produits

### Dans la sous-couche sol-gel pigmentée

### Oxyde métallique colloïdal

- silice colloïdale sous forme de solution aqueuse à 30% de silice, commercialisée par la société Clariant sous la dénomination commerciale Klebosol,
- silice colloïdale sous forme de solution aqueuse à 40% de silice, commercialisée par la société Grace Davison sous la dénomination commerciale Ludox,
- alumine colloïdale sous forme de solution aqueuse à 5% commercialisée par la société DGTec.

### Solvants

- isopropanol,
- 2-(2-Butoxyethoxy)-éthanol (nom commercial : Butyl CARBITOL™),
- Eau déminéralisée.

### Huile de silicone

- huile méthyl-silicone commercialisée par la société DOW CORNING sous la dénomination commerciale « DOW CORNING 200 Fluid », et ayant une viscosité de 300 cSt,
- huile méthyl-silicone commercialisée par la société Bluestar sous la dénomination commerciale « Rhodorsil 47V50 »,
- huile méthyl-silicone hydroxylée commercialisée par la société Wacker sous la dénomination commerciale « OEL CT101M ».

### Pigments

- pigment noir minéral commercialisé par la société Ferro sous la dénomination commerciale « FA 1220 »,
- pigment bleu outremer commercialisé par la société Holliday pigments, sous la dénomination « CM13 »,
- pigment rouge de pérylène commercialisé par BASF,
- pigment blanc en dioxyde de titane commercialisé par la société Kronos,
- pigment orange « 259150 » commercialisé par la société BASF.

### Charges

- alumine en poudre commercialisée par la société ALCAN sous la dénomination commerciale « CAHPF 1000 »,
- alumine en paillettes nanométriques dispersées en phase aqueuse à 40% commercialisée par la société Baikowski.

### Précurseurs sol-gel

- méthyltriethoxysilane (MTES) répondant à la formule Si(OC₂H₅)₃CH₃,
- méthyltriméthoxysilane (MTMS) répondant à la formule Si(OCH₃)₃CH₃,
- tétraéthoxysilane (TEOS) répondant à la formule Si(OC₂H₅)₄.

### Acides

- acide formique,
- acide acétique.

### Dans la couche sol-gel de finition :

### Oxyde métallique colloïde

- silice colloïdale sous forme de solution aqueuse à 30% de silice, commercialisée par la société Clariant sous la dénomination commerciale Klebosol,
- silice colloïdale sous forme de solution aqueuse à 40% de silice, commercialisée par la société Grace Davison sous la dénomination commerciale Ludox,
- alumine colloïdale sous forme de solution aqueuse à 5% commercialisée par la société DGTec.

### Solvants

- isopropanol,
- butylglycol,
- eau déminéralisée.

### Huile de silicone

- huile méthyl-silicone commercialisée par la société DOW CORNING sous la dénomination commerciale « DOW CORNING 200 Fluid », et ayant une viscosité de 300 cSt,
- huile méthyl-silicone commercialisée par la société BLUESTAR sous la dénomination commerciale « Rhodorsil 47V50 » huile méthyl-silicone hydroxylée commercialisée par la société Wacker sous la dénomination commerciale « OEL CT101M ».

### Particules anisotropes

- paillettes de mica enrobées d'oxyde de fer commercialisées par la société ECKART sous la dénomination STAPA TA Ferricon 200 (paillettes magnétisables),
- paillettes de mica enrobées d'oxyde de fer commercialisées par la société MERCK sous la dénomination Colorona Blackstar blue ou green (paillettes magnétisables),
- paillettes de mica non enrobées commercialisées par la société MERCK sous la dénomination Iriodin 119 (paillettes non magnétisables),
- microfibres en acier inoxydable.

### Précurseurs sol-gel

- méthyltriéthoxysilane (MTES) répondant à la formule Si(OC₂H₅)₃CH₃,
- méthyltriméthoxysilane (MTMS) répondant à la formule Si(OCH₃)₃CH₃,
- tétraéthoxysilane (TEOS) répondant à la formule Si(OC₂H₅)₄.

### Acides

- acide formique,
- acide acétique.

### Tests

### Test de résistance à l'écaillage

L'aptitude à résister à l'écaillage de différents revêtements vitreux, de mêmes épaisseurs et appliqués sur des substrats métalliques identiques, est évaluée comme suit.

Ces revêtements sont soumis à une rayure de 10 mm de long, qui est induite par une pointe de diamant calibrée de 50 µm de diamètre, qui est appliquée avec une force augmentant progressivement de 0 à 5 Newtons. Pour cela, on utilise un appareil commercialisé sous la dénomination « Microscratch tester » de la société CSM Instruments.

Après formation de la rayure, on détermine sous microscope à partir de quelle force un écaillage du revêtement jusqu'au métal est visible (voir tableau 3 de résultats).

### EXEMPLE COMPARATIF 1 :

### Réalisation d'un revêtement vitreux bicouche conformément au procédé de la demande internationale WO2010/123294

On prépare une première composition sol-gel colorée sous la forme d'un bi-composant comprenant une partie A et une partie B :
- la partie A comprend une dispersion de silice colloïdale, de l'eau déminéralisée, l'isopropanol, le butylglycol, l'huile de silicone, les charges et les pigments,
- la partie B comporte le précurseur sol-gel (silane) ainsi que l'acide organique.

Ces deux parties A et B peuvent se conserver plus de 6 mois séparément.

Les parties A et B sont ensuite réunies dans un mélangeur à température ambiante (par exemple un réacteur muni d'une pale pour assurer le brassage, ou un bidon que l'on mettra en rotation à 80 tours/minute sur un tourne-jarres) afin d'initier la réaction d'hydrolyse du silane. Il est ensuite nécessaire de laisser maturer le mélange pendant au moins 24 heures avant l'application du mélange A+B sur un support, de manière à faire progresser suffisamment les réactions d'hydrolyse/condensation.Sous l'effet de ces réactions on observe une élévation de température jusqu'à 55°C. Ce temps de maturation peut cependant être réduit ou rallongé en fonction de la vitesse de brassage des produits et de la température atteinte ou maintenue pendant le brassage. La durée de vie en pot du mélange est d'au moins 48 heures.

La composition sol-gel colorée est indiquée dans le tableau 1 :

**Tableau 1**

| **Constituants** | **Quantités en pourcentage massique (gammes de variation)** | **Quantités en pourcentage massique (exemple préférentiel)** |
|---|---|---|
| Silice colloidale Klebosol à 30% | 25-35% | 29% |
| Eau déminéralisée | 10-15% | 10% |
| Isopropanol | 1-5% | 4,5% |
| Huile silicone 47V50 | 0,1-1% | 1% |
| Pigment noir FA1220 | 20-25% | 20% |
| MTES | 30-35% | 35% |
| Acide formique | 0,5-1% | 0,5% |

Puis le mélange A+B est filtré sur une grille en acier inoxydable ayant des orifices de 40 microns d'ouverture, avant d'être appliqué au pistolet pneumatique en au moins une couche d'épaisseur 35 microns pour former une sous-couche colorée, sur la surface intérieure d'un support en aluminium sablé, dégraissé, et porté à une température de 55°C.

Puis, on procède au séchage de la sous-couche ainsi formée à 100°C durant 30 minutes, comme enseigné par WO 2010/123294.

On procède ensuite à la préparation d'une composition sol-gel incolore, de la même manière que la sous-couche pigmentée décrite ci-dessus, mais en remplaçant les pigments par des paillettes enrobées d'oxyde de fer. Cette composition sol-gel incolore est filtrée sur une grille en acier inoxydable ayant des orifices de 80 µm d'ouverture et appliquée au moyen d'un pistolet pneumatique sur la sous-couche, qui est portée à une température de 55°C.

La composition sol-gel incolore est indiquée dans le tableau 2 :

**Tableau 2**

| **Constituants** | **Quantités en pourcentage massique (gammes de variation)** | **Quantités en pourcentage massique (exemple préférentiel)** |
|---|---|---|
| Silice colloidale Ludox à 40% | 25-30% | 30% |
| Eau déminéralisée | 10-15% | 10% |
| Isopropanol | 1-5% | 5% |
| Butylglycol | 5-15% | 10% |
| Huile silicone 47V50 | 0,1-1% | 1% |
| Paillettes Colorona Blackstar OU microfibres inox | 0,1-15% | 2% |
| MTES | 35-45% | 40% |
| Acide acétique | 1-2% | 2% |

Il s'avère impossible de former un film continu avec la couche de composition sol-gel incolore. En effet, le procédé tel qu'enseigné par WO 2010/123294 avec une étape de séchage à au moins 100°C conduit à une densification trop importante de la sous-couche colorée, qui développe ainsi un caractère hydrophobe tel qu'on ne peut alors plus former de couche continue avec la composition sol-gel incolore pailletée : cette dernière se rétracte, lors de son application sur la sous-couche, sous forme de gouttes isolées.

Par conséquent, si l'on applique les conditions opératoires du procédé de fabrication d'un revêtement sol-gel tel qu'enseigné par WO 2010/123294, il n'est pas possible de réaliser un revêtement vitreux bicouche homogène.

### EXEMPLE COMPARATIF 2 :

### Réalisation d'un film revêtement vitreux monocouche comportant des paillettes sensiblement parallèles au film.

On prépare une composition sol-gel incolore sous la forme d'un bi-composant comprenant une partie A et une partie B :
- la partie A comprend une dispersion de silice colloïdale, l'eau déminéralisée, l'isopropanol, le butylglycol, l'huile de silicone ainsi que des paillettes de mica enrobées d'oxyde de fer,
- la partie B comporte un précurseur de type sol-gel (silane) ainsi qu'un acide organique.

Ces deux parties A et B peuvent se conserver plus de 6 mois séparément.

Les parties A et B sont ensuite réunies dans un mélangeur à température ambiante (par exemple un réacteur muni d'une pale pour assurer le brassage, ou un bidon que l'on mettra en rotation à 80 tours/minute sur un tourne-jarres) afin d'initier la réaction d'hydrolyse du silane. Il est ensuite nécessaire de laisser maturer le mélange pendant au moins 24 heures avant l'application du mélange A+B sur un support, de manière à faire progresser suffisamment les réactions d'hydrolyse/condensation. Sous l'effet de ces réactions on observe une élévation de température jusqu'à 55°C. Ce temps de maturation peut cependant être réduit ou rallongé en fonction de la vitesse de brassage des produits et de la température atteinte ou maintenue pendant le brassage. La durée de vie en pot du mélange est d'au moins 48 heures.

La composition sol-gel incolore est la même que celle indiquée dans le tableau 2.

Puis, le mélange est filtré sur une grille en acier inoxydable ayant des orifices de 80 microns d'ouverture avant d'être appliqué par pulvérisation au pistolet pneumatique en au moins un film continu d'épaisseur 20 microns, sur un support en aluminium sablé, dégraissé, et porté à une température de l'ordre de 60°C pour faciliter l'application.

Lors de la projection les particules arrivent d'une manière aléatoire, et sous l'effet de la pesanteur, elles s'orientent essentiellement parallèlement au support tant qu'elles ont suffisamment de mobilité pour le faire.

On procède ensuite à une cuisson du revêtement ainsi formé, à une température de 250°C durant au moins 15 minutes.

L'épaisseur sèche finale du revêtement ainsi obtenu est de 12 µm.

Les observations de ce revêtement au Microscope Electronique à Balayage (MEB) correspondent aux images MEB représentées à la figure 5, qui montrent que les paillettes contenues dans le film de revêtement sont en grande majorité essentiellement parallèles au film, c'est-à-dire présentant un angle par rapport au substrat inférieur à 20°.

### EXEMPLE COMPARATIF 3 :

### Réalisation d'un film de revêtement vitreux bicouche comportant des paillettes sensiblement parallèles au film.

On prépare une composition sol-gel colorée sous forme d'un bi-composant comprenant une partie A et une partie B :
- la partie A comprend une dispersion de silice colloïdale, de l'eau déminéralisée, l'isopropanol, le butylglycol, l'huile de silicone, les charges et les pigments,
- la partie B comporte un précurseur sol-gel (silane), ainsi que l'acide organique.

Ces deux parties A et B peuvent se conserver plus de 6 mois séparément.

Les parties A et B sont ensuite réunies dans un mélangeur à température ambiante (par exemple un réacteur muni d'une pale pour assurer le brassage, ou un bidon que l'on mettra en rotation à 80 tours/minute sur un tourne-jarres) afin d'initier la réaction d'hydrolyse du silane. Il est ensuite nécessaire de laisser maturer le mélange pendant au moins 24 heures avant l'application du mélange A+B sur un support, de manière à faire progresser suffisamment les réactions d'hydrolyse/condensation. Sous l'effet de ces réactions on observe une élévation de température jusqu'à 55°C. Ce temps de maturation peut cependant être réduit ou rallongé en fonction de la vitesse de brassage des produits et de la température atteinte ou maintenue pendant le brassage. La durée de vie en pot du mélange est d'au moins 48 heures.

La composition sol-gel colorée est la même que celle indiquée dans le tableau 1.

Puis le mélange est filtré sur une grille en acier inoxydable ayant des orifices de 40 microns d'ouverture avant d'être appliqué au pistolet pneumatique en au moins une couche d'épaisseur 55 microns, sur la surface intérieure d'un support en aluminium sablé, dégraissé, et porté à une température de 55°C pour faciliter l'application du mélange sur le substrat.

Puis, une composition sol-gel incolore contenant des paillettes de mica enrobées est préparée de la même manière que dans l'exemple comparatif 2, puis appliquée par pulvérisation au pistolet sur la sous-couche pigmentée pour former une couche de finition sous forme de film.

On procède ensuite à une cuisson de l'ensemble à une température de 250°C durant au moins 15 minutes minimum.

La composition sol-gel incolore est la même que celle indiquée dans le tableau 2.

L'épaisseur sèche finale du revêtement ainsi formé est de 45 microns.

Les observations de ce revêtement au Microscope Electronique à Balayage (MEB) correspondent aux images MEB représentées à la figure 5, qui montrent que les paillettes contenues dans le film de revêtement sont en grande majorité essentiellement parallèles au film, c'est-à-dire présentant un angle par rapport au substrat inférieur à 20°.

### EXEMPLE COMPARATIF 4 :

### Réalisation d'un film de revêtement vitreux bicouche comportant des microfibres sensiblement parallèles au film.

Cet exemple ne se différencie de l'exemple comparatif 3 que par les particules dans la couche de finition : on utilise à la place des paillettes enrobées des microfibres d'acier inoxydable.

L'épaisseur sèche finale du revêtement ainsi formé est également de 45 microns.

### EXEMPLE 1 :

### Réalisation d'un film de revêtement monocouche conforme à la présente invention comportant des paillettes essentiellement perpendiculaires au film

On prépare, de la même manière qu'à l'exemple comparatif 2, une composition sol-gel sous forme d'un bi-composant A+B. Cette composition est également appliquée, de la même manière que dans l'exemple comparatif 2, sur un support en aluminium sablé, dégraissé, et porté à une température de 60°C.

En revanche, immédiatement après l'application par pulvérisation de la composition sol-gel (mais préalablement à la cuisson), on applique un champ magnétique de 70 mT au moyen d'un aimant permanent disposé sous le substrat. Sous l'action du champ magnétique, les paillettes de mica, grâce à leur enrobage d'oxyde de fer magnétique, s'orientent selon les lignes de champ, c'est à dire au droit de l'aimant. On observe que les paillettes de mica enrobées sont majoritairement inclinées d'un angle α compris entre 20° et 90° par rapport à au plan moyen du film.

On procède ensuite à une cuisson du revêtement à 250°C durant au moins 15 minutes minimum.

L'épaisseur sèche finale du revêtement ainsi formé est de 12 microns.

### EXEMPLE 2 :

### Réalisation d'un film de revêtement bicouche conforme à la présente invention comportant des paillettes essentiellement perpendiculaires au film

On prépare, de manière similaire à l'exemple comparatif 3, une composition sol-gel colorée et une composition sol-gel incolore contenant des paillettes de mica enrobées. Ces compositions sont appliquées successivement sur un support en aluminium sablé, dégraissé, et porté à une température de 55°C, également de la même manière que dans l'exemple comparatif 3.

En revanche, immédiatement après l'application par pulvérisation de la composition sol-gel incolore (mais préalablement à la cuisson), on applique un champ magnétique de 70 Mt au moyen d'un aimant permanent disposé sous le substrat. Sous l'action du champ magnétique, les paillettes de mica, grâce à leur enrobage d'oxyde de fer magnétique, s'orientent selon les lignes de champ, c'est à dire au droit de l'aimant sensiblement verticalement.

On procède ensuite à une cuisson du revêtement à 280°C durant au moins 15 minutes.

Les observations de ce revêtement au Microscope Electronique à Balayage (MEB) correspondent aux images MEB représentées à la figure 4, qui montrent que la majorité des paillettes tend à s'orienter perpendiculairement au film de revêtement formé, c'est-à-dire qu'une majorité d'entre elles présentent un angle d'inclinaison par rapport au substrat compris entre 20 et 90°.

### EXEMPLE 3 :

### Réalisation d'un film de revêtement bicouche conforme à la présente invention comportant des microfibres essentiellement perpendiculaires au film

Cet exemple ne se différencie de l'exemple 2 que par la forme des particules dans la couche de finition : on utilise à la place des paillettes enrobées des microfibres d'acier inoxydable.

### EXEMPLE 4 :

### Réalisation d'un film de revêtement bicouche conforme à la présente invention comportant des paillettes essentiellement perpendiculaires au film

Cet exemple ne se différencie de l'exemple 2 que par la nature de l'huile silicone. On remplace l'huile silicone 47V50 par l'huile silicone hydroxylée OEL CT101M, dans les mêmes proportions massiques (indiquées dans le tableau 2).

### EXEMPLE 5 :

### Evaluation de la résistance à l'écaillage

On évalue l'aptitude à résister à l'écaillage des revêtements vitreux réalisés dans les exemples 1 à 4 et les exemples comparatifs 1 à 4 conformément au test indiqué précédemment. Les résultats obtenus sont présentés dans le tableau 3 ci-dessous :

**Tableau 3**

| | **Epaisseur du revêtement (en µm)** | **Délamination au métal (en N)** |
|---|---|---|
| **Exemple comparatif 1** (procédé selon WO2010-123294) | NA | Non mesurable étant donné la discontinuité du film |
| **Exemple comparatif 2** (monocouche et paillettes non orientées) | 12 | 1,31 +/- 0,09 |
| **Exemple 1** (monocouche et paillettes orientées) | 12 | 1,57 +/- 0,10 |
| **Exemple comparatif 3** (bicouche et paillettes non orientées) | 45 | 3,91 +/- 0,17 |
| **Exemple 2** (Bicouche et paillettes orientées) | 45 | 4,56 +/- 0,19 |
| **Exemple comparatif 4** (bicouche et microfibres non orientées) | 45 | 3,98 +/- 0,16 |
| **Exemple 3** (bicouche et microfibres orientées) | 45 | 4,49 +/- 0,14 |
| **Exemple 4** (bicouche avec huile hydroxylée, paillettes orientées) | 45 | 4,52 +/- 0,13 |

La comparaison de l'exemple 1 avec l'exemple comparatif 2 (cas d'un revêtement monocouche) montre clairement que la force à appliquer lors du test pour obtenir une délamination au métal est plus importante lorsque les particules sont, au sens de l'invention, orientées sensiblement perpendiculairement au revêtement (c'est-à-dire qu'elles sont majoritairement inclinées d'un angle α compris entre 20° et 90° par rapport au plan moyen du film), que dans le cas contraire (c'est-à-dire que les particules sont orientées de manière aléatoire, ou sont majoritairement inclinées d'un angle α inférieur à 20° par rapport au plan moyen du film). Cela signifie que la résistance à l'écaillage est meilleure lorsque le revêtement comporte des particules orientées.

La comparaison de l'exemple 2 et de l'exemple comparatif 3 conduit aux mêmes conclusions pour un revêtement bicouche.

La comparaison de l'exemple 3 et de l'exemple comparatif 4 montre que des conclusions similaires s'appliquent également lorsque l'on utilise des particules anisotropes de forme différente (microfibres au lieu de plaquettes).

Enfin, la comparaison de l'exemple 4 et de l'exemple 2 montre que lorsqu'on utilise une huile silicone hydroxylée, on obtient les mêmes résultats qu'avec une huile silicone non hydroxylée.

## Revendications

1. Revêtement vitreux **caractérisé en ce qu'**il comprend au moins une couche (31) se présentant sous forme d'un film continu d'un matériau sol-gel comprenant une matrice formée à partir d'au moins un polyalcoxylate métallique et dans laquelle sont dispersées des particules (32) de forme anisotrope, ladite couche comprenant au moins une zone (311) dans laquelle lesdites particules sont des particules qui sont majoritairement inclinées d'un angle α déterminé conformément à la description compris entre 20° et 90° par rapport au plan moyen du film.

2. Revêtement selon la revendication 1, dans lequel lesdites particules (32) comprennent des particules aptes à être orientées (321) par un moyen mécanique ou physique.

3. Revêtement selon la revendication 2, dans lequel lesdites particules aptes à être orientées sont des particules magnétisables.

4. Revêtement selon la revendication 3, dans lequel ladite couche de revêtement vitreux comporte en outre des particules non magnétisables.

5. Revêtement selon l'une quelconque des revendications 1 à 4, dans lequel les particules magnétisables, et le cas échéant les particules non magnétisables, présentent une structure cœur-enveloppe.

6. Revêtement selon la revendication 5, dans lequel lesdites particules magnétisables comprennent au moins un métal ferromagnétique et ont une structure cœur-enveloppe, dans laquelle le métal ferromagnétique est dans le cœur et/ou dans l'enveloppe desdites particules.

7. Revêtement selon la revendication 6, dans lequel les particules magnétisables sont des paillettes de mica enrobées d'oxyde de fer Fe₂O₃.

8. Revêtement selon l'une quelconque des revendications 3 à 6, dans lequel les particules magnétisables sont des fibres d'acier inoxydable ferritique.

9. Revêtement selon l'une quelconque des revendications 1 à 8, ledit revêtement étant non opaque et comportant en outre, adjacente à la zone (311), au moins une zone (312) dans laquelle les particules sont des particules qui sont majoritairement inclinées d'un angle α compris entre 0° et 20° par rapport au film ou dans laquelle les particules sont disposées de manière aléatoire dans la couche se présentant sous forme de film.

10. Revêtement selon l'une quelconque des revendications 1 à 9, dans lequel l'alternance des zones (311) et (312) définit un décor.

11. Revêtement selon l'une quelconque des revendications 1 à 10, comprenant :
- une sous-couche (30) destinée à être disposée sur un support (2), et
- au moins une couche de finition (31) recouvrant ladite sous-couche et destinée à être en contact avec l'environnement extérieur, ladite couche de finition se présentant sous forme d'un film continu d'un matériau sol-gel comprenant une matrice formée à partir d'au moins un polyalcoxylate métallique dans laquelle sont dispersées lesdites particules anisotropes.

12. Revêtement selon l'une quelconque des revendications 1 à 11, dans lequel ledit revêtement vitreux comprend au moins un pigment choisi parmi les pigments thermostables, les sels métalliques, les pigments semi-conducteurs thermochromes et leurs mélanges.

13. Article (1) **caractérisé en ce qu'**il comprend un support (2) présentant deux faces opposées (21, 22), dont l'une (21) au moins est recouverte d'un revêtement tel que défini selon l'une quelconque des revendications 1 à 12.

14. Procédé de fabrication d'un revêtement vitreux selon la revendication 1 sur un support (2) dans lequel sont dispersées des particules anisotropes, **caractérisé en ce qu'**il comprend une étape d'orientation desdites particules anisotropes par un moyen physique ou mécanique dans au moins une zone (311) dudit revêtement vitreux.

15. Utilisation d'un revêtement vitreux tel que défini selon l'une quelconque des revendications 1 à 12 pour la fabrication d'un article culinaire.

## Patentansprüche

1. Glasähnliche Beschichtung, **dadurch gekennzeichnet, dass** sie mindestens eine Schicht (31) umfasst, die die Form einer kontinuierlichen Folie aus einem Sol-Gel-Material aufweist, das eine Matrix umfasst, die ausgehend von einem metallischen Polyalkoxylat gebildet ist, und in der Teilchen (32) mit anisotroper Form verteilt sind, wobei die Schicht mindestens eine Zone (311) umfasst, in der die Teilchen Teilchen sind, die größtenteils um einen bestimmten Winkel α gemäß der Beschreibung geneigt sind, der zwischen 20° und 90° in Bezug auf die Mittenebene der Folie liegt.

2. Beschichtung nach Anspruch 1, wobei die Teilchen (32) Teilchen umfassen, die geeignet sind, durch ein mechanisches oder physisches Mittel ausgerichtet (321) zu werden.

3. Beschichtung nach Anspruch 2, wobei die Teilchen, die geeignet sind, ausgerichtet zu werden, magnetisierbare Teilchen sind.

4. Beschichtung nach Anspruch 3, wobei die Schicht aus glasähnlicher Beschichtung außerdem nicht magnetisierbare Teilchen umfasst.

5. Beschichtung nach einem der Ansprüche 1 bis 4, wobei die magnetisierbaren Teilchen und gegebenenfalls die nicht magnetisierbaren Teilchen eine Herz-Mantel-Struktur aufweisen.

6. Beschichtung nach Anspruch 5, wobei die magnetisierbaren Teilchen mindestens ein ferromagnetisches Metall umfassen und eine Herz-Mantel-Struktur aufweisen, in der sich das ferromagnetische Metall in dem Herz und/oder in dem Mantel der Teilchen befindet.

7. Beschichtung nach Anspruch 6, wobei die magnetisierbaren Teilchen Mika-Pailletten sind, die mit Eisenoxid Fe₂O₃ beschichtet sind.

8. Beschichtung nach einem der Ansprüche 3 bis 6, wobei die magnetisierbaren Teilchen Fasern aus ferritischem rostfreiem Stahl bestehen.

9. Beschichtung nach einem der Ansprüche 1 bis 8, wobei die Beschichtung nichtopak ist und außerdem an die Zone (311) anschließend mindestens eine Zone (312) umfasst, in der die Teilchen Teilchen sind, die größtenteils um einen Winkel α zwischen 0° und 20° in Bezug auf die Folie geneigt sind, oder in der die Teilchen willkürlich in der Schicht, die die Form einer Folie aufweist, angeordnet sind.

10. Beschichtung nach einem der Ansprüche 1 bis 9, wobei der Wechsel der Zonen (311) und (312) ein Dekor definiert.

11. Beschichtung nach einem der Ansprüche 1 bis 10, die Folgendes umfasst:
- eine Unterschicht (30), die dazu bestimmt ist, auf einem Träger (2) angeordnet zu sein, und
- mindestens eine Endfertigungsschicht (31), die die Unterschicht abdeckt und dazu bestimmt ist, mit der äußeren Umgebung in Kontakt zu sein, wobei die Endfertigungsschicht die Form einer durchgehenden Folie aus einem Sol-Gel-Material aufweist, das eine Matrix umfasst, die ausgehend von mindestens einem metallischen Polyalcoxylat gebildet ist, in der die anisotropen Teilchen verteilt sind.

12. Beschichtung nach einem der Ansprüche 1 bis 11, wobei die glasähnliche Beschichtung mindestens ein Pigment umfasst, das aus den wärmebeständigen Pigmenten, den Metallsalzen, den thermochromen Halbleiterpigmenten und ihren Gemischen ausgewählt ist.

13. Artikel (1), **dadurch gekennzeichnet, dass** er einen Träger (2) umfasst, der zwei entgegengesetzte Flächen (21, 22) aufweist, von welchen mindestens eine (21) mit einer Beschichtung, wie in einem der Ansprüche 1 bis 12 definiert, bedeckt ist.

14. Verfahren zur Herstellung einer glasähnlichen Beschichtung nach Anspruch 1 auf einem Träger (2), in der anisotrope Teilchen verteilt sind, **dadurch gekennzeichnet, dass** es einen Schritt des Ausrichtens der anisotropen Teilchen durch ein physisches oder mechanisches Mittel in mindestens einer Zone (311) der glasähnlichen Beschichtung umfasst.

15. Verwendung einer glasähnlichen Beschichtung, wie nach einem der Ansprüche 1 bis 12 definiert, für die Fertigung eines Küchenartikels.

## Claims

1. Vitreous coating **characterised in that** it comprises at least one layer (31) embodied in the form of a continuous film of a sol-gel material comprising a matrix formed from at least one metallic polyalkoxylate and wherein anisotropically-shaped particles (32) are dispersed, said layer comprising at least one area (311) wherein said particles are particles predominantly inclined by an angle α determined in accordance with the description between 20° and 90° relative to the median plane of the film.

2. Coating according to claim 1, wherein said particles (32) comprise particles that can be oriented (321) by a mechanical or physical means.

3. Coating according to claim 2, wherein said particles able to be oriented are particles that can be magnetised.

4. Coating according to claim 3, wherein said layer of vitreous coating further includes particles that cannot be magnetised.

5. Coating according to any of claims 1 to 4, wherein the particles that can be magnetised, and where applicable the particles that cannot be magnetised, have a core-envelope structure.

6. Coating according to claim 5, wherein said particles that can be magnetised comprise at least one ferromagnetic metal and have a core-envelope structure, wherein the ferromagnetic metal is in the core and/or in the envelope of said particles.

7. Coating according to claim 6, wherein the particles that can be magnetised are mica flakes coated with iron oxide Fe₂O₃.

8. Coating according to any of claims 3 to 6, wherein the particles that can be magnetised are fibers of ferritic stainless steel.

9. Coating according to any of claims 1 to 8, said coating being non-opaque and further including, adjacent to the area (311), at least one area (312) wherein the particles are particles which are predominantly inclined by an angle α between 0° and 20° relative to the film or wherein the particles are randomly arranged in the layer having the form of a film.

10. Coating according to any of claims 1 to 9, wherein the alternation of the areas (311) and (312) defines a decor.

11. Coating according to any of claims 1 to 10, comprising :
- a sub-layer (30) intended to be arranged on a support (2), and
- at least one finishing layer (31) that covers said sub-layer and intended to be in contact with the outside environment, said finishing layer having the form of a continuous film of a sol-gel material comprising a matrix formed from at least one metallic polyalkoxylate wherein said anisotropic particles are dispersed.

12. Coating according to any of claims 1 to 11, wherein said vitreous coating comprises at least one pigment selected from thermostable pigments, metallic salts, thermocromatic semi-conductor pigments and mixtures thereof.

13. Article (1) **characterised in that** it comprises a support (2) that has two opposite faces (21, 22), of which one (21) at least is covered with a coating such as defined according to any of claims 1 to 12.

14. Method for manufacturing a vitreous coating according to claim 1 on a support (2) wherein anisotropic particles are dispersed, **characterised in that** it comprises a step of orientation of said anisotropic particles by a physical or mechanical means in at least one area (311) of said vitreous coating.

15. Use of a vitreous coating such as defined according to any of claims 1 to 12 for the manufacturing of a culinary article.
